# EUROPÄISCHE PATENTSCHRIFT

(11) **EP 1 818 283 B1**
(45) Veröffentlichungstag und Bekanntmachung des Hinweises auf die Patenterteilung: **18.06.2008**
(21) Anmeldenummer: 07101909.5
(22) Anmeldetag: 09.09.2005
(51) Int. Cl.: B65G 1/08, B65G 1/04

(54) **Verfahren zum Einlagern von Stückgütern in ein automatisiertes Stückgut-Lager**
Method for storing piece goods in an automated cargo warehouse
Procédé de stockage de marchandises au détail dans un entrepôt de marchandises au détail automatisé

(43) Veröffentlichungstag der Anmeldung: 15.08.2007
(62) Teilanmeldung aus: 05019718.5
(73) Patentinhaber: Rowa Automatisierungssysteme GmbH & Co. KG, 53539 Kelberg (DE)
(72) Erfinder: Hellenbrand, Christoph, 56761 Kaifenheim (DE); Gross, Dietmar, 53539 Kelberg (DE)
(74) Vertreter: Schmidt, Frank-Michael

(56) Entgegenhaltungen:
- WO-A-03/018443
- DE-A1- 19 635 396
- DE-U1- 29 703 230
- DE-U1-5202004 020 32
- US-B1- 6 409 449

## Beschreibung

Die Erfindung betrifft ein Verfahren für ein automatisiertes Lager für eine Vielzahl unterschiedlicher Stückgüter. Insbesondere betrifft die Erfindung ein Verfahren zum Einlagern von Stückgütern in ein derartiges Lager.

Automatisierte Lager für eine Vielzahl unterschiedlicher Stückgüter werden beispielsweise in Apotheken oder im Pharmaziegroßhandel eingesetzt, um Arzneimittelpackungen zu lagern. Hierbei dominieren zwei Lagerkonzepte: Regallager und Schachtlager.

Bei automatisierten Regallagern, wie sie beispielsweise aus der Patentschrift DE 195 09 951 C2 bekannt sind, werden die Arzneimittelpackungen auf ebenen Lagerflächen abgelegt, wobei die Lagerflächen von Regalböden oder Schubladenböden gebildet werden. Die Arzneimittelpackungen werden in der Regel einzeln von einem oder mehreren Bediengeräten von einer Einlagerungsstation zu dem gewünschten Lagerort auf dem Regalboden transportiert und später - bei ihrer Auslagerung - von dem Lagerplatz im Regalboden entnommen und zu einer Abgabestelle transportiert. Die Regallager sind vorzugsweise chaotisch organisiert, das heißt, auf jedem Regalboden lagern unterschiedliche Arzneimittelpackungen nebeneinander, wobei eine größtmögliche Packungsdichte (Flächenbelegungsdichte) angestrebt wird. Derartige Regallager werden insbesondere dort eingesetzt, wo eine große Vielzahl unterschiedlicher Arzneimittelpackungen jeweils nur in geringer Stückzahl ein- und ausgelagert werden, beispielsweise im Apothekenbereich.

Die DE 24 07 756 beschreibt eine Vorrichtung zum Auslagern von Stückgütern aus einem Regalsystem. Eine Entnahmevorrichtung ist dazu im gleichen Winkel geneigt wie die Lageschächte des Regalsystems.

Die WO 03/018443 A1 offenbart ein Regallager, bei dem in den Regalfächern Schieber angeordnet sind. Die Schieber ermöglichen eine Auslagerung der in den Regalfächern befindlichen Stückgüter.

Aus der DE 196 35 396 A1 ist ein Regallagersystem mit einem Bediengerät bekannt. Das Bediengerät hat eine Greifvorrichtung zum Entnehmen von Stückgütern aus den Regalen und ist verfahrbar vor den Regalböden angeordnet.

Bei solchen Schachtlagern werden die Arzneimittelpackungen in geneigten Lagerschächten gehalten, wobei die Arzneimittelpackungen an einem oberen Ende des Lagerschachts eingefüllt und am unteren Ende des Lagerschachts entnommen werden können. Zwischen Einlagerung und Auslagerung rutschen die Arzneimittelpackungen den Lagerschacht hinab. In jedem Lagerschacht werden mehrere gleichartige Arzneimittelpackungen hintereinander gelagert. Für jede Arzneimittelpackungsart gibt es einen Lagerschacht. Die Dimensionen der Lagerschächte sind an die Dimensionen der Arzneimittelpackungen angepaßt. Derartige Lager werden insbesondere dort verwendet, wo Arzneimittelpackungen einer vorgegebenen Art und Abmessung häufig und vorzugsweise zu mehreren Packungen gleichzeitig eingelagert und ausgelagert werden. Beispielsweise werden derartige Lagersysteme im Großhandel eingesetzt.

Es gibt auch kombinierte Lagersysteme, bei denen der Lagerautomat gleichzeitig Regallager und Lagerschächte aufweist. Bei diesen bekannten Anordnungen werden die Arzneimittelpackungen von einem Bediengerät in die Regallager ein- und ausgelagert und darüber hinaus in die Lagerschächte eingelagert (das heißt, von dem Bediengerät in die jeweils oberen Enden der Lagerschächte eingefüllt). An ihrem unteren Ende weisen die Lagerschächte eine zusätzliche Entnahmevorrichtung auf. Die Lagerschächte enthalten jeweils gleichartige Arzneimittelpackungen. Bei diesem Mischkonzept werden die seltener und in geringerer Stückzahl benötigten Arzneimittelpackungen in dem Regallager und die häufig und in größerer Stückzahl benötigten Arzneimittelpackungen in den Schächten gelagert.

Es gibt automatisierte Lager für eine Vielzahl unterschiedlicher Stückgüter, die mehrere geneigte Lagerschächte aufweisen. Unter einem Lagerschacht soll hier irgendeine langgestreckte Aufnahme für mehrere in der geneigten Ebene (diese könnte auch in der Neigungsrichtung gekrümmt und/oder zusätzlich quer zur Neigungsrichtung geneigt sein) hintereinander angeordnete Stückgüter verstanden werden. Diese Aufnahme weist eine Auflagefläche, die auch von einem Gitter oder von Schienen gebildet sein kann, und seitliche Begrenzungen, die beispielsweise durch Wände oder Schienen gebildet werden, auf. Die Ausbildung und Abmessung der Lagerschächte kann an die zu lagernden Stückgüter angepaßt sein. Die Stückgüter sind beispielsweise quaderförmig, können aber auch zylindrisch sein, beispielsweise die Form von Flaschen annehmen. Die unterschiedlichen Stückgüter können auch unterschiedliche Abmessungen haben. Jeder Lagerschacht weist an seinem unteren Ende eine erste Sperre zum Halten der in dem Lagerschacht liegenden Stückgüter auf. Das automatisierte Lager weist ferner ein in wenigstens zwei Raumrichtungen verfahrbares Bediengerät auf. Das Bediengerät weist einen geneigten Pufferschacht auf, der mehrere Stückgüter aufnehmen kann, wobei der Pufferschacht an das untere Ende eines Lagerschachts heranfahrbar ist. Das Bediengerät weist ferner eine Vorrichtung zum Hinauffördern von in dem Pufferschacht einliegenden Stückgütern nach oben in einen Lagerschacht auf. Die Verwendung eines derartigen Pufferschachts im Bediengerät gestattet die Auslagerung auch solcher Stückgüter, die sich nicht bereits am unteren Ende eines Lagerschachts befinden. Dies wiederum ermöglicht Lagerschächte, die gleichzeitig unterschiedliche Stückgüter aufnehmen können.

Aufgabe der Erfindung ist es, die Vorteile der o.g. Möglichkeiten zur Lagerung von Arzneimittelpackungen oder anderen Stückgütern unterschiedlicher Art in einem einheitlichen Lagerkonzept zu vereinigen.

Diese Aufgabe wird erfindungsgemäß durch ein Verfahren mit den Merkmales des Anspruchs 1 zum Einlagern wenigstens eines Stückguts in ein automatisiertes Lager gelöst.

Bei dem erfindungsgemäßen Verfahren zum Einlagern wenigstens eines Stückguts in ein automatisiertes Lager für eine Vielzahl unterschiedlicher Stückgüter wird zunächst ein Pufferschacht eines in wenigstens zwei Raumrichtungen verfahrbaren Bediengeräts mit unterschiedlichen Stückgütern befüllt. Dann wird das Bediengerät derart an einen Lagerschacht einer Mehrzahl geneigter Lagerschächte herangefahren, daß sich das obere Ende des geneigten Pufferschachts an dem unteren Ende des geneigten Lagerschachts befindet. Es wird zunächst derjenige Lagerschacht angefahren, in den das im Pufferschacht zuoberst liegende Stückgut eingelagert werden soll. Schließlich wird das Stückgut in dem Pufferschacht und über den Pufferschacht hinaus solange nach oben geschoben, bis es sich in dem Lagerschacht an einer Position befindet, an der es von einer in dem Lagerschacht angeordneten ersten Sperre gehalten werden kann. Wenn beispielsweise die Sperre lediglich von einer am unteren Ende des Lagerschachts angeordneten Anschlagkante gebildet wird, so wird das einzulagernde Stückgut (oder die einzulagernden Stückgüter) lediglich über die Anschlagkante hinübergeschoben.

Bei einer bevorzugten Ausführungsform, bei der die Breite des Pufferschachts an die Abmessungen des zu transportierenden Stückguts angepaßt werden kann (beispielsweise durch verschiebbare Seitenwandungen), wird die Breite des Pufferschachts vor Aufnahme des einzulagernden Stückguts automatisch angepaßt.

Die auf diese Weise befüllten Lagerschächte können jeweils mit gleichartigen Stückgütern befüllt werden. Soll das Lager jedoch eine große Anzahl unterschiedlicher Stückgüter aufnehmen, die jeweils nur in geringer Stückzahl vorliegen, so kann ein Lagerschacht auch mit mehreren unterschiedlichen Stückgütern befüllt werden. Bei der bevorzugten Ausführungsform wird hierbei jedoch darauf geachtet, daß die Breite der in einen Lagerschacht eingeschobenen unterschiedlichen Stückgüter (beispielsweise Arzneimittelpackungen) einen vorgegebenen Prozentsatz der Breite des Lagerschachts nicht unterschreitet. In dem Lager mit einer Vielzahl von Lagerschächten wird deren Breite in einer gewissen Rasterung eingestellt, so daß die einzelnen Lagerschächte unterschiedlicher Breite jeweils Stückgüter in einem vorgegebenen Intervall der Breitenabmessung aufnehmen. Auch die Höhe der in einen Lagerschacht aufzunehmenden Stückgüter muß innerhalb eines vorgegebenen Intervalls liegen, damit mehrere Stückgüter unterschiedlicher Höhenabmessung hintereinander in dem Lagerschacht gehalten werden können. Da die Stückgüter beim Einlagern vorab vermessen und identifiziert werden, können sie vor dem Befüllen des Pufferschachts des Bediengeräts in eine gewünschte Raumorientierung gebracht werden. Die Steuereinrichtung des automatisierten Lagers ist mit den Einrichtungen zum Vermessen, Identifizieren und Positionieren der Einlagerungsstation und darüber hinaus mit den Steuereinrichtungen des Bediengeräts gekoppelt und hat Kenntnis von den Breiten und den Füllgraden sämtlicher Lagerschächte. Die Steuereinrichtung wählt in Abhängigkeit von den erfaßten Abmessungen und den ihr bekannten Füllständen geeigneter Lagerschächte die zu wählende Orientierung für das Stückgut aus und sorgt dafür, daß das Stückgut in der gewählten Orientierung in den Pufferschacht des Bediengeräts gefüllt wird.

Bei einer bevorzugten Ausführungsform weist das Lager nicht nur solche geneigten Lagerschächte auf, die zum Bediengerät hin abfallen, sondern darüber hinaus auch Lagerschächte, die vom Bediengerät weg abfallen. Das Bediengerät weist vorzugsweise wenigstens einen Pufferschacht auf, dessen Sperre freigebbar ist, so daß die in den Pufferschacht aufgenommenen Stückgüter nach unten in einen der weiteren Lagerschächte rutschen können. Bei dieser bevorzugten Ausführungsform ist ein Einlagerungsverfahren denkbar, bei dem der Pufferschacht zunächst mit mehreren Stückgütern befüllt wird und anschließend wenigstens ein oberes in dem Pufferschacht liegendes Stückgut in einen ersten Lagerschacht hinaufgeschoben wird. Anschließend wird das Bediengerät derart an einen weiteren Lagerschacht herangefahren, daß sich ein unteres Ende des Pufferschachts an dem oberen Ende des weiteren Lagerschachts befindet. Dann wird wenigstens ein unteres in dem Pufferschacht liegendes Stückgut mittels Freigabe einer an dem unteren Ende des Pufferschachts angeordneten zweiten Sperre nach unten in das obere Ende des weiteren Lagerschachts entlassen. Bei einem Bediengerät mit einem oder vorzugsweise mehreren Pufferschächten können auf diese Weise unterschiedliche Stückgüter auf zeitsparende Weise sowohl in obere Lagerschächte (die jeweils unterschiedliche Stückgüter enthalten können) als auch in untere Lagerschächte (die jeweils Stückgüter derselben Art enthalten) eingelagert werden.

Vorteilhafte und/oder bevorzugte Weiterbildungen der Erfindung sind in den Unteransprüchen gekennzeichnet.

Im folgenden wird die Erfindung anhand eines in den Zeichnungen dargestellten bevorzugten Ausführungsbeispiels näher erläutert. In den Zeichnungen zeigen:
Figur 1 eine schematische Seitenansicht eines Bediengeräts mit zwei geneigten Pufferschächten in Zuordnung zu einigen ausgewählten Lagerschächten; und
Figur 2 eine schematische Draufsicht auf das in Figur 1 gezeigte Bediengerät neben einigen nebeneinander angeordneten Lagerschächten.

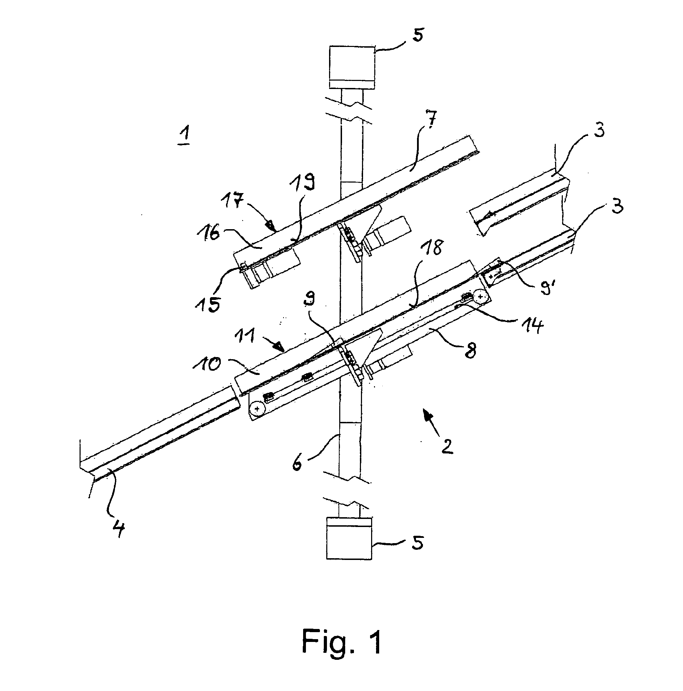

Figur 1 zeigt eine schematische Seitenansicht eines Ausschnitts eines automatisierten Lagers 1. Ein Bediengerät 2 ist in der Mitte zwischen zu dem Bediengerät hin abfallenden Lagerschächten 3 (von denen lediglich zwei gezeichnet sind) und vom Bediengerät 2 weg abfallenden Lagerschächten 4 (hier ist lediglich einer gezeigt) angeordnet. Die geneigten Lagerschächte 3 und 4 können jeweils eine Mehrzahl von Arzneimittelpackungen aufnehmen. Die Arzneimittelpackungen sind hintereinander in dem Schacht angeordnet, wobei der durch die Packungen gebildete Stapel am unteren Ende jedes Lagerschachts durch eine jeweilige Sperre gehalten wird. Bei den Lagerschächten 3 befinden sich die Sperren an dem dem Bediengerät 2 zugewandten Ende. Bei den Lagerschächten 4 befinden sich die Sperren an dem vom Bediengerät 2 abgewandten, in Figur 1 nicht gezeigten unteren Ende.

Das Bediengerät 2 ist in zwei Raumrichtungen verfahrbar, nämlich in einer großen Z-Achse entlang einer senkrechten Führungsschiene 6 sowie in einer X-Achse entlang einer am Fußboden und einer an der Decke montierten Führungsschiene 5. Das Bediengerät 2 weist zwei als "Greifer" bezeichnete Vorrichtungen 7 und 8 zum Aufnehmen von Arzneimittelpackungen auf. Die bei dem Ausführungsbeispiel gemäß Figur 1 unten dargestellte Greifer-Vorrichtung 8 weist eine geneigte Auflageebene 18 auf, über der zwei seitliche parallele Führungsbacken 10 derart geführt sind, daß zwischen den Führungsbacken 10 über der Auflageebene 18 ein geneigter Pufferschacht 11 gebildet wird. Das Bediengerät 2 weist ferner eine zweite Greifer-Vorrichtung 7 zum Aufnehmen von Arzneimittelpackungen auf. Die Greifer-Vorrichtung 7 weist ebenfalls eine geneigte Auflageebene 19 auf, über der zwei seitliche parallele Führungsbacken 16 derart angeordnet sind, daß zwischen den Führungsbacken 16 über der Auflageebene 19 ein zweiter Pufferschacht 17 gebildet wird.

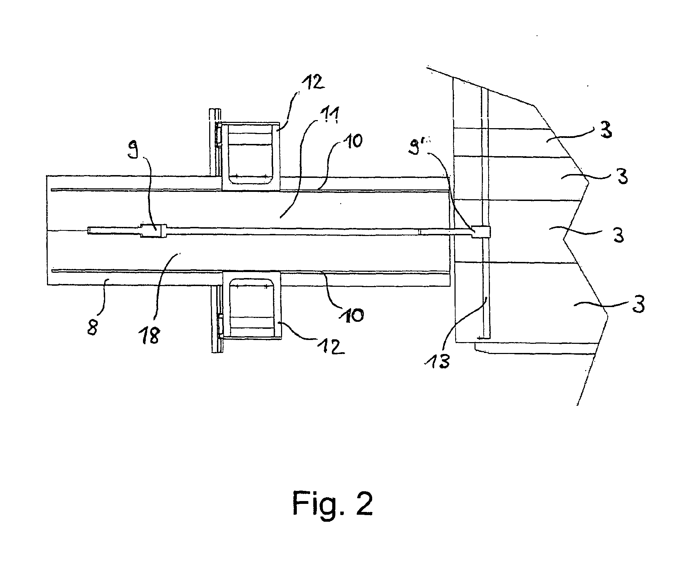

Figur 2 zeigt eine schematische Draufsicht auf einen Teil der in Figur 1 gezeigten Anordnung, nämlich eine Draufsicht auf die untere Greifer-Vorrichtung 8 und daneben angeordnete Lagerschächte 3. Wie in Figur 2 zu erkennen ist, sind die seitlichen Führungsbacken 10, die den Pufferschacht 11 seitlich begrenzen, jeweils mit Stellantrieben 12 verbunden. Mit Hilfe der Stellantriebe 12 können die Führungsbacken 11 über der Auflageebene 18 zusammen und auseinander gefahren werden, so daß die Breite des Pufferschachts 11 der Breite der darin enthaltenen Arzneimittelpackungen angepaßt werden kann.

Darüber hinaus ist in Figur 2 zu erkennen, daß die Breite der Lagerschächte 3 unterschiedlich ist, wobei die Breite den Breitenabmessungen der darin enthaltenen Arzneimittelpackungen angepaßt ist. An dieser Stelle sei bereits darauf hingewiesen, daß in jeden der Lagerschächte 3 unterschiedliche Arzneimittelpackungen eingelagert werden können, die auch unterschiedliche Breitenabmessungen aufweisen können. Allerdings sind die eingelagerten Arzneimittelpackungen insoweit an die Breite des Schachts angepaßt, als sie ein bestimmtes Maß nicht unterschreiten sollten, um beispielsweise die Gefahr eines Verkantens der Arzneimittelpackungen oder eines seitliches Verrutschens zu verringern. Gegebenenfalls kann in jedem Führungsschacht an dessen unterem Ende eine Einrichtung vorgesehen sein, die beim Einschieben der Arzneimittelpackungen dafür sorgt, daß diese eine definierte Lage im Schacht auch dann einnehmen, wenn ihre Breite geringer ist als die Breite des Schachts.

Bei dem in Figur 1 dargestellten Ausführungsbeispiel unterscheiden sich die untere Greifer-Vorrichtung 8 und die obere Greifer-Vorrichtung 7 wie folgt. Die untere Greifer-Vorrichtung 8 weist einen Schieber 9 auf, der einen in der Mitte des Pufferschachts 11 geführten, aus dem Boden 18 herausragenden Haltefinger umfaßt. Die in den Pufferschacht 11 nach unten rutschenden Packungen bleiben an dem Haltefinger des Schiebers 9 liegen. Mit Hilfe des Antriebs 14 (beispielsweise ein Seilzug mit Umlenkrollen) kann der Schieber 9 nach oben in Richtung des Lagerschachts 3 geschoben werden, wobei die in dem Pufferschacht 11 enthaltenen Packungen in den Lagerschacht 3 hineingeschoben werden. In den Figuren 1 und 2 ist der Schieber 9 jeweils in einer unteren Position und - als Schieber 9' - in einer oberen Position gezeigt. Die obere Position stellt diejenige Position dar, bei der der Schieber 9' soweit in den Lagerschacht 3 hineingefahren ist, daß sich die vor dem Schieber befindliche Arzneimittelpackung hinter einem Anschlag oder einer Sperre 13 des Lagerschachts befindet, so daß bei Aktivieren der Sperre 13 die Arzneimittelpackung im Lagerschacht 3 auch dann verbleibt, wenn der Schieber 9 in den Pufferschacht 11 zurückgefahren wird. Das Vorsehen des Schiebers 9 im unteren Pufferschacht 11 ermöglicht dessen Verwendung als Umlagerungsschacht. Aus einem Lagerschacht 3 entnommene Arzneimittelpackungen, die nach entsprechender Positionierung des oberen Endes des Pufferschachts 11 vor dem unteren Ende des Lagerschachts 3 und nach Freigabe der Sperre des Lagerschachts 3 in den Pufferschacht 11 hineingerutscht sind, können nach erneuter Positionierung des oberen Endes des Pufferschachts 11 an ein unteres Ende eines Lagerschachts 3 mit Hilfe des Schiebers 9 über die Sperre des Lagerschachts 3 hinweg in den Lagerschacht zurückgeschoben oder in einen anderen Lagerschacht hineingeschoben werden.

Die obere Greifer-Vorrichtung 7 mit dem Pufferschacht 17 weist bei dem in Figur 1 dargestellten Ausführungsbeispiel keinen Schieber, sondern lediglich einen als Auslagerungsnocken bezeichneten Anschlag 15 innerhalb des Pufferschachts 11 auf. In den Pufferschacht 17 hineinrutschende Arzneimittelpackungen werden an dessen unterem Ende durch den Auslagerungsnocken 15 gehalten. Der Pufferschacht 17 wird deshalb als Auslagerungsschacht bezeichnet. Zum Auslagern der im Pufferschacht 17 enthaltenen Arzneimittelpackungen fährt das Bediengerät 2 an eine Auslagerungsstation derart heran, daß das untere Ende des Pufferschachts 17 sich an einer Stelle befindet, an der die Arzneimittelpackungen auf eine Transporteinrichtung zur Ausgabestation übergeben werden können. Der Auslagerungsnocken 15 wird in den Boden 19 des Pufferschachts 17 zurückgefahren und die in dem Pufferschacht 17 enthaltenen Arzneimittelpackungen rutschen zur Auslagerungsstation.

Bei einem Ausführungsbeispiel kann auch der Haltefinger des Schiebers 9 unter den Boden 18 des Pufferschachts 11 gefahren werden, so daß die in dem Pufferschacht 11 enthaltenen Arzneimittelpackungen nach unten aus dem Pufferschacht hinausrutschen. Diese Möglichkeit kann beispielsweise verwendet werden, um die in den Pufferschacht 11 enthaltenen Arzneimittelpackungen an der Auslagerungsstation auszulagern oder - wie es in Figur 1 gezeigt ist - das untere Ende des Pufferschachts 11 an das obere Ende eines Lagerschachts 4 heranzufahren und einen Lagerschacht 4 mit Arzneimittelpackungen zu befüllen. Selbstverständlich kann auch der Pufferschacht 17 zum Befüllen der Lagerschächte 4 verwendet werden.

Bei alternativen Ausführungsformen kann sich die Greifer-Vorrichtung 7 des Bediengeräts 2 auch unterhalb oder neben der Greifer-Vorrichtung 8 befinden. Auch können mehr als zwei Greifer-Vorrichtungen vorgesehen sein. Darüber hinaus können beide Greifer-Vorrichtungen 7 und 8 mit einem Schieber 9 versehen sein.

Das Bediengerät 2 kann somit Arzneimittelpackungen in die Lagerschächte 3 sowohl einlagern als auch aus den Lagerschächten 3 auslagern. Darüber hinaus kann das Bediengerät 2 Arzneimittelpackungen in die Lagerschächte 4 einlagern. An den (in Figur 1 nicht gezeigten) unteren Enden der Lagerschächte 4 befinden sich Auslagerungsvorrichtungen zum Auslagern der in den Schächten 4 enthaltenen Arzneimittelpackungen, wobei die dort ausgelagerten Arzneimittelpackungen vorzugsweise auf ein Förderband ausgelagert werden. Die Lagerschächte 4 dienen (bedingt durch die Art der Auslagerung) zum Lagern von Arzneimittelpackungen jeweils derselben Art, so daß diese Schächte 4 vorzugsweise solche Arzneimittelpackungen sortenrein aufnehmen, die häufig und in größeren Stückzahlen benötigt werden. Die Lagerschächte 3 können sowohl sortenrein als auch gemischt gefüllt werden, wobei die darin enthaltenen Arzneimittelpackungen nicht nur verschiedenartig sein sondern auch verschiedene Abmessungen haben können. Deshalb dienen die Lagerschächte 3 vorzugsweise der Lagerung von Arzneimittelpackungen, die seltener und in geringeren Stückzahlen benötigt werden.

Das Einlagern von Arzneimittelpackungen kann beispielsweise wie folgt vorgenommen werden. Das Bediengerät 2 wird zu einer Einlagerungsstation gefahren. Dort wird der untere Pufferschacht 11 mit mehreren Arzneimittelpackungen verschiedener Art befüllt. Zum Befüllen der sortenreinen Lagerschächte 4 kann an der Einlagerungsstation auch der obere Pufferschacht 17 befüllt werden. Dann fährt das Bediengerät 2 zu den gewünschten Lagerschächten 3 bzw. 4. Sollen Arzneimittelpackungen in die Lagerschächte 3 eingelagert werden, so fährt das Bediengerät 2 derart an die Lagerschächte 3, daß sich das obere Ende des Pufferschachts 11 am unteren Ende des gewünschten Lagerschachts 3 befindet. Dann wird der Schieber 9 aktiviert und schiebt die Arzneimittelpackung bzw. die Arzneimittelpackungen nach oben in den Lagerschacht 3. Es kann vorgesehen sein, daß der Schieber 9 nur ein Teil der im Pufferschacht 11 enthaltenen Arzneimittelpackungen in den jeweiligen Lagerschacht 3 hineinschiebt und die verbleibenden wieder mit zurücknimmt. Die verbleibenden Arzneimittelpackungen können dann in einen anderen Lagerschacht 3 hineingeschoben oder nach unten in einen Lagerschacht 4 entlassen werden. Die in den Pufferschacht 17 der oberen Greifer-Vorrichtung 7 aufgenommenen Arzneimittelpackungen können in einen sortenreinen Lagerschacht 4 entlassen werden, nachdem das untere Ende des Pufferschachts 17 am oberen Ende des Lagerschachts 4 positioniert worden ist.

Während der gesamten Einlagerungsvorgänge überwacht eine Steuereinrichtung die Bewegungsabläufe und verfolgt, in welchen der Lagerschächte 3 oder 4 welche Arzneimittelpackungen an welcher Position eingelagert worden sind. Diese Informationen werden so innerhalb der Steuereinrichtung abgelegt, daß ein problemloses Wiederauffinden und späteres Auslagern einer beliebigen gewünschten Arzneimittelpackung möglich ist.

Das Auslagern von Arzneimittelpackungen kann auf verschiedene Weise geschehen. In dem sortenreinen Schacht 4 enthaltene Arzneimittelpackungen werden mit Hilfe der nicht dargestellten, am unteren Ende des Schachts 4 angeordneten Auslagerungsvorrichtung ausgelagert und auf eine Fördereinrichtung übergeben, wobei die Fördereinrichtung die ausgelagerten Arzneimittelpackungen zu einem gewünschten Ausgabeplatz transportiert. Zur Auslagerung eines an einer untersten Position eines Lagerschachts 3 befindlichen Arzneimittels (oder auch mehrerer an den untersten Positionen befindlicher Arzneimittelpackungen) genügt es, wenn beispielsweise die Greifer-Vorrichtung 7 mit ihrem oberen Ende an das untere Ende des Lagerschachts 3 heranfährt, die Sperre des Lagerschachts kurzzeitig freigegeben wird, so daß die gewünschten Arzneimittelpackungen in den Pufferschacht 17 hineinrutschen. Anschließend wird der Pufferschach 17 an eine Auslagerungsstation herangefahren und der Auslagerungsnocken 15 freigegeben, so daß die in dem Pufferschacht 17 enthaltenen auszulagernden Arzneimittelpackungen hinausrutschen können. Soll jedoch eine Arzneimittelpackung (oder auch mehrere Arzneimittelpackungen) ausgelagert werden, die sich nicht an der untersten Position im Lagerschacht 3 befindet, so wird wie folgt vorgegangen. Zunächst wird der Umlagerungs-Pufferschacht 11 an das untere Ende des Lagerschachts 3 herangefahren. Dann wird die Sperre des Lagerschachts 3 derart freigegeben, daß die unterhalb der gewünschten Arzneimittelpackung befindlichen, nicht auszulagernden Arzneimittelpackungen in den Pufferschacht 11 hineinrutschen. Dann wird der Auslagerungs-Pufferschacht 17 an das untere Ende des Lagerschachts 3 herangefahren, in dem sich jetzt die auszulagernde Arzneimittelpackung an der untersten Position befindet. Dann wird die Sperre des Lagerschachts 3 derart kurzzeitig freigegeben, daß die gewünschte Arzneimittelpackung in den Pufferschacht 17 hineinrutscht. Anschließend wird wieder der Pufferschacht 11 an das andere Ende des Lagerschachts 3 herangefahren. Dann werden die in dem Pufferschacht 11 enthaltenen nicht auszulagernden Arzneimittelpackungen mit Hilfe des Schiebers 9 zurück in den Lagerschacht 3 geschoben. Schließlich fährt das Bediengerät 2 zur Auslagerungsstation, wo die in den Auslagerungs-Pufferschacht 17 enthaltene Arzneimittelpackung (oder auch mehrere enthaltene Arzneimittelpackungen) durch Freigabe des Auslagerungsnockens 15 ausgelagert werden. Bei einer alternativen Ausführungsform, bei der eine schnellere Auslagerung gewünscht wird, kann das Bediengerät 2, bevor es die nicht auszulagernden Arzneimittelpackungen aus dem Pufferschacht 11 zurück in den Lagerschacht 3 schiebt, zunächst den Auslagerungspufferschacht 17 an die Auslagerungsstation heranfahren und die darin enthaltenen Arzneimittelpackungen auslagern. Darüber hinaus ist es auch denkbar, daß in dem Auslagerungs-Pufferschacht 17 eine Reihe von Arzneimittelpackungen (beispielsweise die zu einer Bestellung gehörenden bzw. auf einem Rezept aufgeführten Arzneimittelpackungen) gesammelt werden, bevor der Auslagerungs-Pufferschacht 17 an die Auslagerungsstation gefahren wird. Es ist auch denkbar, daß die Entscheidung, welche Reihenfolge gewählt wird, in Abhängigkeit davon getroffen wird, welchen optimalen Weg die Steuereinrichtung berechnet.

Im Rahmen des Erfindungsgedankens sind zahlreiche alternative Ausführungsformen denkbar. Beispielsweise könnten die Greifer-Vorrichtungen 7 und 8 um die Z-Achse drehbar ausgeführt sein, so daß sich zum Bediengerät 2 hin abfallende Lagerschächte 3 an beiden Seiten des Ganges, in dem das Bediengerät 3 sich entlang der X-Achse bewegt, angeordnet sein können. Die am unteren Ende der Lagerschächte 3 angeordnete Sperre kann sowohl einen eigenen Auslösemechanismus als auch einen vom Bediengerät ausgelösten Mechanismus aufweisen. Das Lagersystem eignet sich nicht nur für quaderförmige Arzneimittelpackungen, sondern darüber hinaus auch beispielsweise für Schuhkartons, Postpakete oder Flaschen. Es sind auch Ausführungsformen denkbar, bei dem mehrere Bediengeräte in dem Gang angeordnet sind oder bei dem die Greif-Vorrichtungen des Bediengeräts relativ zueinander bewegbar sind.

## Patentansprüche

1. Verfahren zum Einlagern wenigstens eines Stückguts in ein automatisiertes Lager für eine Vielzahl unterschiedlicher Stückgüter, wobei das Lager mehrere geneigte Lagerschächte und ein in wenigstens zwei Raumrichtungen verfahrbares Bediengerät aufweist, wobei jeder Lagerschacht an seinem unteren Ende eine erste Sperre zum Halten der in dem Lagerschacht liegenden Stückgüter aufweist, wobei das Bediengerät wenigstens einen geneigten Pufferschacht aufweist, der mehrere Stückgüter aufnehmen kann, wobei:
a) der Pufferschacht mit mehreren Stückgütern befüllt wird,
b) das Bediengerät derart an einen der Lagerschächte herangefahren wird, daß sich das obere Ende des Pufferschachts an dem unteren Ende des Lagerschachts befindet, und
c) wenigstens eines der Stückgüter in dem Pufferschacht und über den Pufferschacht hinaus solange nach oben geschoben wird, bis es sich in dem Lagerschacht an einer Position befindet, an der es von der ersten Sperre gehalten werden kann,
**dadurch gekennzeichnet,**
**dass** der Pufferschacht im Schritt a) mit mehreren unterschiedlichen Stückgütern befüllt wird.

2. Verfahren nach Anspruch 1, **dadurch gekennzeichnet,**
**daß** im Schritt c) mehrere Stückgüter in den Lagerschacht hinaufgeschoben werden.

3. Verfahren nach Anspruch 2, **dadurch gekennzeichnet,**
**daß** im Schritt c) mehrere unterschiedliche Stückgüter in den Lagerschacht hinaufgeschoben werden.

4. Verfahren nach Anspruch 1 oder 2, **dadurch gekennzeichnet,**
**daß** wenigstens ein oberes in dem Pufferschacht liegendes Stückgut in einen ersten Lagerschacht hinaufgeschoben, das Bediengerät zu einem zweiten Lagerschacht bewegt und wenigstens ein weiteres in dem Pufferschacht liegendes Stückgut in den zweiten Lagerschacht hinaufgeschoben wird.

5. Verfahren nach Anspruch 4, **dadurch gekennzeichnet,**
**daß** wenigstens in den ersten oder den zweiten Lagerschacht mehrere unterschiedliche, in dem Pufferschacht liegende Stückgüter hinaufgeschoben werden.

6. Verfahren nach Anspruch 1, **dadurch gekennzeichnet, daß** der Pufferschacht im Schritt a) mit mehreren Stückgütern befüllt wird, und daß:
c') wenigstens ein oberes in dem Pufferschacht liegendes Stückgut in einen ersten Lagerschacht hinaufgeschoben wird,
d) das Bediengerät derart an einen weiteren Lagerschacht herangefahren wird, daß sich ein unteres Ende des Pufferschachts an dem oberen Ende des weiteren Lagerschachts befindet, und
e) wenigstens ein unteres in dem Pufferschacht liegendes Stückgut mittels Freigabe einer an dem unteren Ende des Pufferschachts angeordneten zweiten Sperre nach unten in das obere Ende des weiteren Lagerschachts entlassen wird.

7. Verfahren nach Anspruch 1, **dadurch gekennzeichnet, daß**:
d) der Pufferschacht erneut mit wenigstens einem Stückgut befüllt wird,
e) das Bediengerät derart an einen weiteren Lagerschacht herangefahren wird, daß sich ein unteres Ende des Pufferschachts an dem oberen Ende des weiteren Lagerschachts befindet, und
f) wenigstens ein unteres in dem Pufferschacht liegendes Stückgut mittels Freigabe einer an dem unteren Ende des Pufferschacht angeordneten zweiten Sperre nach unten in den weiteren Lagerschacht entlassen wird.

8. Verfahren nach Anspruch 7, **dadurch gekennzeichnet, daß** im Schritt d) der Pufferschacht mit mehreren gleichartigen Stückgütern befüllt wird, die im Schritt f) in den weiteren Lagerschacht entlassen werden.

9. Verfahren nach Anspruch 1, **dadurch gekennzeichnet, daß** im Schritt a) die Breite des Pufferschachts an eine Abmessung des wenigstens einen Stückguts angepaßt wird.

10. Verfahren nach Anspruch 1 oder 2, **dadurch gekennzeichnet, daß** im Schritt b) das Bediengerät an einen Lagerschacht herangefahren wird, dessen Breite an eine Abmessung des wenigstens einen Stückguts angepaßt ist.

## Claims

1. A method of storing at least one article in an automated store for a plurality of different articles, wherein the store has a plurality of inclined storage shafts and a service device movable in at least two spatial directions, wherein each storage shaft has at its lower end a first stop for retaining the articles situated in the storage shaft, wherein the service device has at least one inclined buffer shaft, which can accommodate a plurality of articles, wherein:
a) the buffer shaft is filled with a number of articles,
b) the service device is advanced to one of the storage shafts such that the upper end of the buffer shaft is located at the lower end of the storage shaft, and
c) at least one of the articles is pushed upwardly in the buffer shaft and above the buffer shaft until it is located at a position in the storage shaft at which it can be retained by the first stop,
**characterised in that** the buffer shaft is filled in step a) with a plurality of different articles.

2. A method as claimed in claim 1, **characterised in that** a plurality of articles is pushed up into the storage shaft in step c).

3. A method as claimed in claim 2, **characterised in that** a plurality of different articles are pushed up into the storage shaft in step c).

4. A method as claimed in claim 1 or 2, **characterised in that** at least one upper article situated in the buffer shaft is pushed up into a first storage shaft, the service device is moved to a second storage shaft and at least one further article situated in the buffer shaft is pushed up into the second storage shaft.

5. A method as claimed in claim 4, **characterised in that** a plurality of different articles situated in the buffer shaft are pushed up at least into the first or the second storage shaft.

6. A method as claimed in claim 1, **characterised in that** the buffer shaft is filled in step a) with a plurality of articles and that:
c') at least one upper article situated in the buffer shaft is pushed up into a first storage shaft,
d) the service device is advanced towards a second storage shaft such that a lower end of the buffer shaft is situated at the upper end of the further storage shaft, and
e) at least one lower article situated in the buffer shaft is discharged downwardly into the upper end of the further storage shaft by releasing a second stop arranged at the lower end of the buffer shaft.

7. A method as claimed in claim 1, **characterised in that**:
d) the buffer shaft is again filled with at least one article,
e) the service device is advanced towards a second storage shaft such that a lower end of the buffer shaft is situated at the upper end of the further storage shaft, and
f) at least one lower article situated in the buffer shaft is discharged downwardly into the further storage shaft by releasing a second stop arranged at the lower end of the buffer shaft.

8. A method as claimed in claim 7, **characterised in that** the buffer shaft is filled in step d) with a plurality of similar articles, which are discharged in step f) into the further storage shaft.

9. A method as claimed in claim 1, **characterised in that** in step a) the breadth of the buffer shaft is matched to a dimension of the at least one article.

10. A method as claimed in claim 1 or 2, **characterised in that** in step b) the service device is advanced towards a storage shaft, the width of which is matched to a dimension of the at least one article.

## Revendications

1. Procédé de stockage d'au moins un article dans un magasin automatisé destiné à une pluralité d'articles différents, dans lequel le magasin présente plusieurs puits de stockage inclinés et un appareil de commande déplaçable dans au moins deux directions spatiales, dans lequel chaque puits de stockage présente, à son extrémité inférieure, un premier dispositif de blocage pour maintenir les articles se trouvant dans le puits de stockage, dans lequel l'appareil de commande comporte au moins un puits tampon incliné qui peut recevoir plusieurs articles, dans lequel :
a) le puits tampon est rempli de plusieurs articles,
b) l'appareil de commande est rapproché de l'un des puits de stockage de sorte que l'extrémité supérieure du puits tampon se trouve à l'extrémité inférieure du puits de stockage, et
c) au moins l' un des articles est poussé vers le haut dans le puits tampon et au-delà du puits tampon jusqu'à ce qu'il se trouve dans le puits de stockage dans une position où il peut être maintenu par le premier dispositif de blocage,
**caractérisé en ce que**
le puits tampon est rempli à l'étape a) de plusieurs articles différents.

2. Procédé selon la revendication 1, **caractérisé en ce que**
plusieurs articles sont poussés vers le haut dans le puits de stockage à l'étape c).

3. Procédé selon la revendication 2, **caractérisé en ce que**
plusieurs articles différents sont poussés vers le haut dans le puits de stockage à l'étape c).

4. Procédé selon la revendication 1 ou 2, **caractérisé en ce que**
au moins un article se trouvant en haut du puits tampon est poussé vers le haut dans un premier puits de stockage, l'appareil de commande est déplacé dans un deuxième puits de stockage et au moins un autre article se trouvant dans le puits tampon est poussé vers le haut dans le deuxième puits de stockage.

5. Procédé selon la revendication 4, **caractérisé en ce que**
plusieurs articles différents se trouvant dans le puits tampon sont poussés vers le haut au moins dans le premier ou le deuxième puits de stockage.

6. Procédé selon la revendication 1, **caractérisé en ce que**
le puits tampon est rempli à l'étape a) de plusieurs articles, et
c') au moins un article se trouvant en haut du puits tampon est poussé vers le haut dans un premier puits de stockage,
d) l'appareil de commande est rapproché d'un autre puits de stockage de sorte qu'une extrémité inférieure du puits tampon se trouve à l'extrémité supérieure de l'autre puits de stockage, et
e) au moins un article se trouvant en bas du puits tampon est délivré vers le bas à l'extrémité supérieure de l'autre puits de stockage par dégagement d'un deuxième dispositif de blocage disposé à l'extrémité inférieure du puits tampon.

7. Procédé selon la revendication 1, **caractérisé en ce que** :
d) le puits tampon est à nouveau rempli d' au moins un article,
e) l'appareil de commande est rapproché d'un autre puits de stockage de sorte qu'une extrémité inférieure du puits tampon se trouve à l'extrémité supérieure de l'autre puits de stockage, et
f) au moins un article se trouvant en bas du puits tampon est délivré vers le bas dans l'autre puits de stockage par dégagement d'un deuxième dispositif de blocage disposé à l'extrémité inférieure du puits tampon.

8. Procédé selon la revendication 7, **caractérisé en ce que** le puits tampon est rempli à l'étape d) de plusieurs articles du même type, qui sont délivrés à l'autre puits de stockage à l'étape f).

9. Procédé selon la revendication 1, **caractérisé en ce que** la largeur du puits tampon est adaptée à l'étape a) à une dimension du au moins un article.

10. Procédé selon la revendication 1 ou 2, **caractérisé en ce que** l'appareil de commande est rapproché, à l'étape b), d'un puits de stockage, dont la largeur est adaptée à une dimension du moins un article.
